# EUROPEAN PATENT APPLICATION

(11) **EP 2 957 583 A1**
(43) Date of publication of application: **23.12.2015**
(21) Application number: 14460111.9
(22) Date of filing: 16.12.2014
(51) Int. Cl.: C08G 18/48, C08J 11/10, C08J 11/12, C08G 65/34, C08G 18/36

(54) **Method of obtaining environment-friendly polyols from waste left after transesterification of plant oils, and method of obtaining rigid polyurethane foams**

(30) Priority: 18.06.2014 PL 40861014
(71) Applicant: Novapur Sp. z o.o., 80-233 Gdansk (PL)
(72) Inventor: Haponiuk, Józef T., 80-344 Gdansk (PL); Piszczyk, Lukasz, 80-107 Gdansk (PL); Danowska, Magdalena, 80-266 Gdansk (PL); Strankowsku, Michal, 80-177 Gdansk (PL)

(57) **Abstract**

Method of obtaining environment-friendly polyols from waste left after transesterification of plant oils is characterized in that the said waste is heated to a temperature in the range between 160 and 240°C, preferably between 175 and 185°C, under reduced pressure in order to distill the volatile fraction. The distillation proceeds until no more condensate appears, and the resultant product has a hydroxyl number between 400 and 1200 mg KOH/g. Then the mixture is cooled below 100°C, and acidified with a protonic acid, more preferably with sulphuric acid pH 4.5 to 9, preferably from 6.5 to 7.5. Next, the reaction mixture is heated under reduced pressure to a temperature between 100 and 120°C until water stops to appear. Polyols are also produced from polyglycols extended with fatty acids and modified fatty acids.

The object of the invention is also the method of obtaining polyurethane foams by using polyols that had been obtained by the method according to the invention. The foams additionally contain substances which retard their flammability.

## Description

The object of the invention is the method of obtaining ecological polyols from natural raw materials and waste as well as the method of obtaining environment-friendly rigid polyurethane foams with reduced flammability that are based on those polyols to be used in construction and automotive industries.

Polyurethanes are polymers consisting of rigid and flexible segments. The flexible segments originate from hydroxyl-terminated oligomers among which oligo-oxypropylenols are the most important compounds obtained via polymerization of propylene oxide with polyols in the presence of KOH as a catalyst. In order to produce polyurethanes, oligomerols containing from 2 to 8 hydroxyl groups per molecule are used; their molecular weights range from 600 to 10 000 (Wirpsza, Poliuretany - chemia, technologia i stosowanie, 1990).

In recent years, the increased interest of industry in polyols from renewable resources has been noted, polyols being one of the two basic components used in the synthesis of polyurethane materials. Those renewable polyols are "Natural Oil Polyols" (NOPs) which are esters of glycerol and higher unsaturated fatty acids. The most commonly used oils in polyols production are a) rapeseed oil and sunflower oil In Europe, b) plam oil and coconut oil in Asia, and c) soybean oil in the USA. A worldwide interest in obtaining polyols from renewable raw materials is a result of ever increasing prices of gas and oil. In Poland, rapeseed oil is most commonly used for producing polyols. Rapeseed oil is a triglyceride of unsaturated higher fatty acids which contains, on average, 61% of acid radicals of oleic acid, 21% of acid radicals of linoleic acid, 10% of linolenic radicals and 8% of acid radicals originating from higher saturated fatty acids. The derivatives of rapeseed oil can be used as reactive components in the production of polyesters, polyamides and polyurethanes.

Methods of obtaining plant polyols are known. One of the methods is a two-step procedure. In the first step, unsaturated fatty acids are subjected to oxidation in order to obtain epoxy derivatives followed by the ring-opening of epoxides in reaction with hydrogen donors which leads to the creation of hydroxyl groups. Epoxidation of plant oils can also be conducted *in situ* by using acetic acid and hydrogen peroxide or other oxidizing agents. By modifying plant oils, polyols with hydroxyl numbers ranging from couple tens to over 400 mg KOH/g and viscosity of couple hundred to over 10 000 mPas can be obtained.

In the process of converting plant oils to monoesters of fatty acids, a waste (glycerol phase) is produced which consists of glycerol, water, salts of fatty acids, inorganic salts, an excess of base used to neutralize the reaction mixture, and remnants of methanol or ethanol from transesterification of oils. Glycerol present in the waste from biodiesel production is difficult to remove mainly due to the presence of hydrophilic salts that cannot be completely dehydrated and removed. Moreover, these salts may act as catalysts therefore waste glycerol is much cheaper than pure glycerol.

It is well known that dehydration of glycerin at a temperature above 250°C results in obtaining polyglycerins with molecular weights between 1 000 and 30 000 which are solid at room temperature. Polyglycerins can be used in the production of polyurethanes however they do not mix with isocyanates due to high viscosity, hydrophilicity and the large number of hydroxyl groups per molecule.

Method of obtaining environment-friendly polyols from waste left after transesterification of plant oils is characterized, according to the invention, in that the aforementioned waste is heated to a temperature between 160 and 240°C, more preferably under reduced pressure in the temperature range from 175 to 185°C, in order to distill the volatile phase. The distillation proceeds until no more condensate appears, and the resultant product has a hydroxyl number between 400 and 1200 mg KOH/g. Next, the product is cooled down below 100°C, acidified with protonic acid, more preferably with sulphuric acid pH 4.5 to 9, preferably from 6.5 to 7.5. Then the reaction mixture is heated under reduced pressure to a temperature between 100 and 120°C until water stops to appear.

Method of obtaining environment-friendly rigid polyurethane foam In the reaction of polyol premix with isocyanate agent is characterized according to the invention by the use of polyol premix which contains environment-friendly polyol produced from waste left after transesterification of plant oils. The waste is heated to a temperature ranging from 160 to 240°C, more preferably from 175 to 185°C under reduced pressure, in order to distill the volatile phase. The distillation proceeds until no more condensate appears, and the resultant product has a hydroxyl number between 400 and 1200 mg KOH/g. Next, the product is cooled down below 100°C, acidified with protonic acid, more preferably with sulphuric acid pH 4.5 to 9, preferably from 6.5 to 7.5. Then the reaction mixture is heated under reduced pressure to a temperature between 100 and 120°C until water stops to appear. A known isocyanate agent is added in the amount corresponding to the value of IC index between 0.5 to 4.0.

Preferably the flame retardants are added in the amount ranging from 0.01 to 40 parts by weight of the foam mass.

Preferably phyllosilicate nanofillers are used as flammability-reducing compounds, preferably nanosilicates, bentonites, smectites, halosites, montmorillonites and/or their modified forms, preferably organophilic modified with cations of organic salts and/or acid-activated and/or substituted with transition-metal ions.

Preferably silsesquioxanes are used as nanofillers.

Preferably the following halogen-free flame retardants are applied: compounds based on phosphate esters, ammonium polyphosphate, phosphites, organophosphates, metal phosphates, red phosphorus, phosphorus-based derivatives of melamine such as melamine phosphate, melamine pyrophosphate, and other products containing nitrogen and phosphorus derivatives, boron compounds, preferably zinc borate, melamine borates and other boric acid-based derivatives, metal hydroxides, preferably aluminum hydroxides and magnesium hydroxides, mineral fillers and additives such as ammonium salts, molybdenum derivatives and magnesium heptahydrate sulfate, melamine and its derivatives, and expanded graphite.

Preferably the nanofiller-antipyrene systems with 0.01 - 20 wt.% of nanofiller and 1 - 40 wt.% of antipyrene are used as flame retardants.

Another invention is the method of obtaining environment-friendly polyols from waste left after transesterification of plant oils. The waste is heated to a temperature ranging from 160 to 240°C, more preferably from 175 to 185°C under reduced pressure, in order to distill the volatile phase. The distillation proceeds until no more condensate appears, and the resultant product has a hydroxyl number between 400 and 1200 mg KOH/g. Next, an excess of fatty acids in the form of methyl esters of fatty acids, and plant oils, e.g. rapeseed oil and/or castor oil and/or tall oil and/or the products of tall oil distillation and/or linseed oil are added. The mixture is mixed at a temperature ranging from 160 to 200°C, preferably from 175 to 185°C, until reaching the constant hydroxyl number. Then the mixture is cooled below 100°, and acidified with a protonic acid, more preferably with sulphuric acid pH 4.5 to 9, preferably from 6.5 to 7.5. Next, the reaction mixture is heated under reduced pressure to a temperature between 100 and 120°C until water stops to appear.

Method of obtaining environment-friendly rigid polyurethane foam in the reaction of polyol premix with isocyanate agent is characterized, according to the invention, by the use of polyol premix containing environment-friendly polyol obtained from waste left after transesterification of plant oils. The waste is heated to a temperature in the range between 160 and 240°C, preferably between 175 and 185°C, under reduced pressure in order to distill the volatile fraction. The distillation proceeds until no more condensate appears, and the resultant product has a hydroxyl number between 400 and 1200 mg KOH/g. Next, an excess of fatty acids in the form of methyl esters of fatty acids, and plant oils, i.e. rapeseed oil and/or castor oil and/or tall oil and/or the products of tall oil distillation and/or linseed oil are added. The mixture is mixed at a temperature ranging from 160 to 200°C, preferably from 175 to 185°C, until reaching the constant hydroxyl number. Then the mixture is cooled below 100°C, and acidified with a protonic acid, more preferably with sulphuric acid pH 4.5 to 9, preferably from 6.5 to 7.5, Next, the reaction mixture is heated under reduced pressure to a temperature between 100 and 120°C until water stops to appear. A known Isocyanate agent is added in the amount corresponding to the value of IC index between 0.5 and 4.0.

Preferably flame retardants are added in the amount ranging from 0.01 to 40 parts by weight relative to the foam mass.

Preferably phyllosilicate nanofillers are used as flame retardants, preferably nanosilicates, bentonites, smectites, halosites, montmorillonites and/or their modified forms, preferably organophilic modified with cations of organic salts and/or acid-activated and/or substituted with transition-metal ions.

Preferably silsesquioxanes are used as nanofillers.

Preferably halogen-free compounds are used as flame retardants, i.e. compounds based on phosphate esters, ammonium polyphosphate, phosphites, organophosphates, metal phosphates, red phosphorus, phosphorus-based derivatives of melamine such as melamine phosphate, melamine pyrophosphate and other products containing nitrogen and phosphorus derivatives, boron compounds, preferably zinc borate, melamine borates and other boric acid-based derivatives, metal hydroxides, preferably aluminum hydroxides and magnesium hydroxides, mineral fillers and additives such as ammonium salts, molybdenum derivatives and magnesium heptahydrate sulfate, melamine and its derivatives, and expanded graphite.

Preferably the nanofiller-antipyrene systems with 0.01 - 20 wt.% of nanofiller and 1-40 wt.% of antipyrene are used as flame retardants.

Another invention is the method of obtaining environment-friendly polyols from waste left after transesterification of plant oils. The method is characterized, according to the invention, in that the waste is heated to a temperature in the range between 160 and 240°C. preferably between 175 and 185°C, under reduced pressure in order to distill the volatile fraction. The distillation proceeds until no more condensate appears, and the resultant product has a hydroxyl number between 400 and 1200 mg KOH/g. Next, an excess of fatty acids in the form of methyl esters of fatty acids, and plant oils, i.e. rapeseed oil and/or castor oil and/or tall oil and/or the products of tall oil distillation and/or linseed oil modified with phosphorus- and/or nitrogen-containing moieties that retard flammability are added. The mixture is mixed at a temperature ranging from 160 to 200°C. preferably from 175 to 185°C, until reaching the constant hydroxyl number. Then the mixture is cooled below 100°C, and acidified with a protonic acid, more preferably with sulphuric acid pH 4.5 to 9, preferably from 6.5 to 7.5. Next, the reaction mixture is heated under reduced pressure to a temperature between 100 and 120°C until water stops to appear.

Method of obtaining environment-friendly rigid polyurethane foam in the reaction of polyol premix and isocyanate agent is characterized, according to the invention, in that the applied polyol premix contains environment-friendly polyol obtained from waste left after transesterification of plant oils. The waste is heated to a temperature in the range between 160 and 240°C, preferably between 175 and 185°C, under reduced pressure in order to distill the volatile fraction. The distillation proceeds until no more condensate appears, and the resultant product has a hydroxyl number between 400 and 1200 mg KOH/g. Next, an excess of fatty acids in the form of methyl esters of fatty acids, and plant oils, i.e. rapeseed oil and/or castor oil and/or tall oil and/or the products of tall oil distillation and/or linseed oil modified with phosphorus- and/or nitrogen-containing moieties that retard flammability are added. The mixture is mixed at a temperature ranging from 160 to 200°C, preferably from 175 to 185°C, until reaching the constant hydroxyl number. Then the mixture is cooled below 100°C, and acidified with a protonic acid, more preferably with sulphuric acid pH 4.5 to 9, preferably from 6.5 to 7.5. Next, the reaction mixture is heated under reduced pressure to a temperature between 100 and 120°C until water stops to appear. A known isocyanate agent is added in the amount corresponding to the value of IC Index between 0.5 and 4.0.

Preferably flame retardants are added in the amount ranging from 0.01 to 40 parts by weight relative to the foam mass.

Preferably phyllosilicate nanofillers are used as flame retardants, preferably nanosilicates, bentonites, smectites, halosites, montmorillonites and/or their modified forms, preferably organophilic modified with cations of organic salts and/or acid-activated and/or substituted with transition-metal ions.

Preferably silsesquioxanes are used as nanofillers.

Preferably halogen-free compounds are used as flame retardants, i.e. compounds based on phosphate esters, ammonium polyphosphate, phosphites, organophosphates, metal phosphates, red phosphorus, phosphorus-based derivatives of melamine such as melamine phosphate, melamine pyrophosphate and other products containing nitrogen and phosphorus derivatives, boron compounds, preferably zinc borate, melamine borates and other boric acid-based derivatives, metal hydroxides, preferably aluminum hydroxides and magnesium hydroxides, mineral fillers and additives such as ammonium salts, molybdenum derivatives and magnesium heptahydrate sulfate, melamine and its derivatives, and expanded graphite.

Preferably the nanofiller-antipyrene systems with 0.01 - 20 wt.% of nanofiller and 1-40 wt.% of antipyrene are used as flame retardants.

The advantage of polyols obtained from waste glycerol and fatty acids is their competitive price compared to petrochemical oligomerols. Moreover, the introduction of chemical moieties that retard flammability allows for producing polyurethane foams which are characterized by increased fire resistance.

As is the case with other man-made materials, the mechanism of polyurethane combustion is a complex process in which numerous physical and chemical phenomena occur. Flames generated during the combustion of polymers are as dangerous as those associated with the burning of other flammable products, e.g. fuels. The burning process can be dominated by a radical mechanism if the accumulation of free radicals or other active particles plays a decisive role. The combustion of a polymer depends on the composition, structure, volume, shape, density, surface porosity, cross-linking density and other properties of this polymer. Non-modified polyurethanes are highly flammable. In the case of polyurethane foams, the burning process depends, to a large extent, on their cell structure. Closed-cell polyurethane foam burns less easily than open-cell foam because the latter allows for a so-called stack (chimney) effect. Polyurethane decomposition starts at the temperature range 80-200°C due to the breaking of hydrogen bonds between oxygen atoms and NH groups in urethane groups. In the case of polyurethane obtained from 2,4- toluene diisocyanate (TDI), the breaking of urethane bonds at temperatures above 200°C is accompanied by the release of hydrogen cyanide. Besides, the compounds such as, acetonitrile, acrylonitrile, propionitrile, benzonitrile, aniline, pyridine and others are also produced. On the other hand, the main volatile products of the pyrolysis of polyurethane obtained from MDI are phenyl Isocyanates and p-tolueneisocyanates as well as o-benzodinitrile, isoquinoline, and carbohydrogens, e.g. benzene, toluene, xylene, biphenyl, naphthalene, carbazole and others. Benzonitrile dominates among the non-volatile products of decomposition; it undergoes further degradation to hydrogen cyanide.

A number of methods for reducing the flammability of polyurethane foams is known, as follows: addition of flame retardants which do not form chemical bonds with a polymer (additive agents); addition of flame retardants which react with the foam components (reactive agents); formation of heat-resistant chemical bonds during the foaming process; usage of flame-retardant aromatic polyisocyanates in the foam production; a combination of the aforementioned methods; and increasing the relative content of aromatic rings and polymer cross-linking density. The addition of flame retardants, so-called antipyrenes, is the most commonly used method. These compounds should fulfill the following requirements: reduce the overall flammability; reduce the release of smoke; do not increase the toxicity of gaseous products of combustion; in the least possible way influence the performance characteristics of foams; and remain in the polyurethane foam during its long-term use.

The impact of antipyrenes on the combustion of polymeric materials has a very complex character. It is based on a couple of concurrent mechanisms among which one is generally dominant, however, as time progresses, another mechanism can take over. This makes it difficult to precisely determine the mechanism of action of flame retardant. The complexity of this phenomenon depends on many factors, *inter alia,* chemical composition of polymer and antipyrene, and physical properties of the final product.

Halogen-free flame retardants are a group of flame retarding agents used in the synthesis of polyurethane foams. Expanded graphite and phosphorus- and nitrogen-containing compounds are the most commonly used substances of this type.

The mechanism of action of phosphorus-containing antipyrene depends on the type and structure of flame retardant and the polymer matrix. During the combustion of polymers, phosphorus-containing antipyrenes act in the condensed or gas phase as well as in both these phases at the same time. In the condensed phase, antipyrenes influence the mechanism and rate of thermal decomposition of polymer, while in the gas phase they act as sweeper molecules against free radicals. Thermal decomposition of phosphorus compounds in the condensed phase is accompanied by the formation of phosphoric acid and polyphosphoric acid. Both these acids form a high-viscosity thin layer on the surface of burnt polymer, which protects it against oxygen and heat. Phosphorus is a catalyst in the reaction of carbonization which takes place during polymer combustion. Thin coatings of glassy material may form on the surface of the layers which becomes an additional obstacle for mass and heat transfer between the solid and gas phases in the burning material.

Nitrogen-containing flame retardants act similarly to their phosphorus-containing counterparts. The most commonly used nitrogen-containing flame retardants are melamine (C₃N₃(NH₂)) and urea (NH₂CONH₂). Burning nitrogen compounds absorb heat. They release gaseous nitrogen, which dilutes toxic gases originating from the matrix decomposition, and form a charcoal layer on the polymer surface. The latter limits heat transfer to the polymer and the release of flammable and toxic gases from the material. As a consequence, the flammability of the material is reduced.

Nanofillers are a relatively new group of materials introduced into the polymer matrix as flame retardants. These compounds improve thermal stability and mechanical properties as well as increase the barrier capacity. Mainly due to improved thermal stability and increased barrier capacity, nanofillers were considered to be used in polymeric materials for improving their flame resistance. The most common nanofillers used as flame retardants in polymers are phyllosilicates. In the published study (Czupryński B.; Polimery 2008,53,no. 2, p. 133-137) rigid polyurethane foams were modified with powder fillers (aluminum hydroxide, melamine, starch, talcum, chalk and borax). The authors evaluated the effect of each filler on the performance characteristics of the final products, particularly on their flammability characteristics.

In another publication (Modesti M.: Polymer Degradation and Stability 77, 2002, p. 195-202) the synthesis of rigid polyurethane foams with fillers such as, expanded graphite and triethyl phosphate was described, including the synergistic effect of combined fillers.

Rigid polyurethane foams modified with both compounds displayed better flame resistance compared to the foams filled with just one flame retardant.

The use of polyols obtained from plant oils (rapeseed, soybean, sunflower and linseed oils) for modifying the composition of polyurethane systems of petrochemical origin was described in the published paper (Prociak A.: Polimery 2008, 53, no. 3, p.195-200). The introduction of polyols from vegetable oils into the polyol mix used in the production of rigid polyurethane foams allows for obtaining porous materials with good thermoinsulating characteristics that surpass those of the products made exclusively from petrochemical polyols. The addition of more than 30 wt.% of plant polyols to the polyol premix can negatively affect the foaming process in the reaction mix due to the opening of pores. This results in the increased value of thermal conductivity coefficient of the final product.

In the published study (Pielichowski J. et al.: Polimery 2005, 50, no. 10, p.723-727) the authors used glycerol as a ring-opening factor to open the oxirane rings in epoxidized plant oils in order to obtain polyol raw materials for the polyurethane foams systems. Soybean polyols used together with glycerol have the desired viscosity, and they form homogenous premixes with other typical polyols used in the production of rigid polyurethane foams. The foams made from a polyol mix consisting of 50 wt.% of soybean polyol are characterized by good performance characteristics.

In the published study (Harikrishnan G.: Ind. Eng. Chem. Res., 45, 2006 p. 7126-7134) rigid polyurethane foams were modified with natural montmorillonite (MMT). The authors evaluated the effect of nanofiller on the performance characteristics of products. in comparison to non-modified foams, the nanofiller-containing foams had better performance characteristics.

A method of obtaining self-extinguishing rigid polyurethane foam has been described in the Polish patent Pat 189670 as follows: 1-4 parts by weight of surfactant, 50-100 parts of polyol (Rokopol RF 551), 2-60 parts of mono- or diphosphate of tri(diethanolaminomethyl)melamine, alternatively up to 40 parts of aliphatic bromo derivatives, 5-50 parts of porophor, and 0.1-7 parts of catalyst (dibutyltin dilaurate) were mixed together. From 7 to 90 parts by weight of polymeric 4,4'-diphenylmethane diisocyanate were added to the polyol premix. Next, the reaction mixture was mixed and poured into a mold. According to the above invention, it has been stated that the use of antipyrenes of Polish origin did not significantly increase the costs of polyurethane foam production, while the application of dibutyltin dilaurate as a catalyst reduced the use of harmful amines in the production process.

The invention described in the Polish patent application P.339246 relates to the environment-friendly rigid polyurethane foam with reduced flammability. The used polyol premix contained 34-79 parts by weight of dibromobutenediol, 5-35 parts of 2-(2-hydroxyethoxy)ethyl-2-hydroxypropyl-3,4,5,6-tetrabromophthalate, 10-20 parts of porophor composed of pentane and water mix, 5-30 parts of additive antipyrene tri(2-chloropropyl) phosphate, alternatively N,N-dimethylcyclohexylamine as a catalyst, and surfactant, i.e. organosilicate-polyester copolymer with isocyanate agent. According to the above description, it was demonstrated that the use of two reactive antipyrenes, i.e. one with bromine bonded to carbon in an aliphatic compound or to carbon in an aromatic compound, and the other being additive antipyrene results in the synergistic effect of the two antipyrenes. The oxygen index of such foams ranges from 24.0 to 27.6. However, it should be pointed out that numerous studies are presently conducted to develop flame retarded polymers that do not contain halogenated additives, including the brominated ones.

The invention described in the Polish patent Pat198605 relates to the environment-friendly rigid polyurethane foam with reduced flammability. The foam is the reaction product of the following components: 24-90 parts by weight of polyol premix, 1.0-2.5 parts relative to polyol premix of foaming catalyst, 1.5-4.0 parts of surfactant, 10-30 parts of foaming agent, bromine- and phosphorus-containing antipyrenes In the amount from 5 to 40 wt.% relative to premix mass and isocyanate agent. The reaction mixture contains trimerization catalyst in the amount of 3.0-5.0 parts by weight relative to the calculated excess of isocyanate agent. According to the above invention, it was stated that by using a system consisting of two antipyrenes, an excess of isocyanate agent, and trimerization catalyst, rigid polyurethane foams with the oxygen index higher than that of non-modified foams can be obtained. At present, the EU regulations oblige manufacturers to produce halogen-free compositions.

Method of obtaining environment-friendly polyurethane foam according to the invention is based on the use of environment-friendly component of polyol mix such as, polyglycerol, polyglycerol extended with fatty acids (e.g. methyl esters of fatty acids, rapeseed oil, castor oil, tall oil and the products of its distillation, and linseed oil) and polyglycerol extended with modified fatty acids. The application of the aforementioned polyol component positively affects the performance characteristics of the obtained polyurethane foams as well as reduces the production costs.

Method of obtaining environment-friendly polyurethane foams with reduced flammability according to the invention relates to obtaining new oligomerols in the first step, which include the following: environment-friendly polyol component or environment-friendly polyol component containing flame-retarding moieties, halogen-free flame retardant, nanofiller or the systems composed of nanofiller and halogen-free flame retardant. Then the new oligomerols should be used to obtain environment-friendly polyurethane foams with reduced flammability and improved mechano-physical properties.

According to the invention, halogen-free (mainly phosphorus- and nitrogen-containing compounds), nanofillers and the flame-retarding systems consisting of nanofiller and halogen-free antipyrene were applied as flame retardants.

According to the invention, in order to obtain environment-friendly rigid polyurethane foams with reduced flammability, appropriate amounts of polyetherols, mixture of catalysts, surfactant, environment-friendly foaming agent in the form of pentane fraction and water, and isocyanate agent are mixed to the effect that the value of IC index ranges from 0.5 to 4.0.

Preferably catalysts such as, potassium acetate solution, sodium acetate in ethylene glycol, solution of sodium acetate in diethylene glycol, 1,3,5-tris(3-dimethylaminopropyl)hexahydro-s-triazine, 2-[2(dimethylamino)ethoxy]ethanol, tin 2-ethylhexanoate, dibutyltin laurate and Dabco-like catalysts, e.g. Dabco 33 LV (solution of 1,4-diazabicyclo[2.2.2]octane in ethylene glycol) or their mixtures.

Preferably the compounds such as, polyglycerols and polyglycerols extended with methyl esters of fatty acids, rapeseed oil, castor oil, tall oil and the products of Its distillation, and linseed oil are used as environment-friendly polyol components.

In order to reduce flammability, it is preferable to use the environment-friendly component of polyol mixture that contains flame-retarding moieties, nanofillers and/or halogen-free flame retardants and/or the flame-retarding systems consisting of nanofiller and halogen-free flame retardant.

The advantage of obtaining the new, environment-friendly rigid polyurethane foam is the use of environment-friendly polyol in the amount ranging from 1 to 100 parts by weight. Because of the presence of reactive hydroxyl groups -OH, the environment-friendly polyol component is built into the polymer structure, which improves its mechanical properties. The presence of environment-friendly polyol component in the produced rigid polyurethane foams significantly improves physico-mechanical properties of the material and slows down its burning.

The main advantage of new, environment-friendly rigid polyurethane foam with reduced flammability is the use of environment-friendly polyol component which contains flame-retarding moieties, halogen-free retardants, and nanofillers in the amount ranging from 0.01 do 40.00 parts by weight. The use of nanofillers In the production of rigid polyurethane foams significantly improves mechanical properties and the barrier capacity of the final products. Preferably the systems consisting of nanofiller and halogen-free retardant should be used.

The invention is described further in the following examples of method implementation.

### Example 1

340 g of alkaline raw glycerol effluent, originating from methanolysis of rapeseed oil, is slowly heated up to 180°C under reduced pressure in the reactor equipped with a distillation column in order to remove methanol and water. The process is terminated when the condensation of distillate stops. The obtained oligoetherol (environment-friendly polyol) is characterized by a hydroxyl number in the range 550-650 mg KOH/g and brown color. Next, the obtained oligomerol is cooled down to 60°C, and the appropriate amounts of 50% solution of sulfuric acid and toluene are added under stirring. The obtained product is centrifuged at 3500 rpm for 10 min. The mixture separates into two parts (sediment and polyglycerol fraction). Polyglycerol fraction is transferred into the reactor and heated to a temperature of 110°C in order to remove toluene. The obtained oligoetherol is characterized by a hydroxyl number between 550 and 650 mg KOH/g and brown color.

### Example 2

Rigid polyurethane foam was produced as follows: 30 parts by weight of the reaction product after the reaction between oxypropylene and sorbitol (Rokopol RF 551) and 70 parts by weight of environment-friendly polyol obtained as described in Example 1 (oligoetherol with L_{OH} 550 - 650 mg KOH/g) were combined. Next, 1.5 parts by weight of 33% solution of potassium acetate in ethylene glycol as a catalyst, 1.5 parts of 1,3,5-tris(3-dimethylaminopropyl)hexahydro-s-triazine catalyst, alternatively with 2-[2(dimethylamino)-ethoxy]ethanol, and 4 parts of surfactant (SC-246 silicone oil) were added. The mixture was thoroughly mixed and then 2 parts by weight of n-pentane (foaming agent) and water (4 parts by weight relative to polyol premix) were added. After complete homogenization of this premix, 80 parts by weight of polymeric isocyanate agent (4,4'-diisocyanatetoluene, pMDI) were mixed into it for 10 sec.

### Example 3

Rigid polyurethane foam was obtained as in Example 2 however the reaction mixture had been modified by the use of nanofillers. Montmorillonite modified with quaternary ammonium salt in the amount of 10 parts by weight was used as a modifier. Such prepared premix was completely homogenized and later mixed with 80 parts by weight of isocyanate agent (pMDI) for 10 sec.

### Example 4

1 000 g of alkaline raw glycerol effluent, originating from methanolysis of rapeseed oil, is slowly heated up to 180°C under reduced pressure and stirring in the reactor equipped with a distillation column in order to remove methanol and water. The process is terminated when the condensation of distillate stops. The obtained oligoetherol is characterized by a hydroxyl number In the range of 550-650 mg KOH/g and brown color. Next, 3 g of 85% aqueous solution of phosphoric acid H₃PO₄ and 150 g of biodiesel are added to the obtained environment-friendly polyol, and the mixture is heated to 100°C. After 1 hour, the mixture is heated to 160°C under reduced pressure for 5 hrs. The obtained oligoetherol is characterized by a hydroxyl number in the range from 250 to 350 mg KOH/g and brown color.

### Example 5

Rigid polyurethane foam was prepared as follows: 30 parts by weight of the reaction product after the reaction between oxypropylene and sorbitol (Rokopol RF 551) and 70 parts by weight of environment-friendly polyol with L_{OH} 550 - 650 mg KOH/g were combined. Next, 1.5 parts by weight of 33% solution of potassium acetate in ethylene glycol as a catalyst, 1.5 parts of 1,3,5-tris(3-dimethylaminopropyl)hexahydro-s-triazine catalyst, interchangeable with 2-[2(dimethylamino)-ethoxy]ethanol, and 4 parts of surfactant (SC-246 silicone oil) were added and thoroughly mixed. Then 2 parts by weight of n-pentane (foaming agent) and 4 parts by weight of water relative to polyol premix were added. The flame retardant system consisting of expanded graphite and montmorillonite modified with quaternary ammonium salt in the amount of 15 parts by weight relative to polyol mixture was used. The relative use of both system components was 5 parts by weight of modified montmorillonite and 10 parts of expanded graphite. Such prepared premix was completely homogenized and then 80 parts by weight of isocyanate agent (pMDI) were mixed into it for 10 sec.

### Example 6

Rigid polyurethane foam was prepared as follows: 30 parts by weight of the reaction product after the reaction between oxypropylene and sorbitol (Rokopol D1002) and 35 parts by weight of environment-friendly polyol with L_{OH} = 250-350 mg KOH/g were combined. Next, 1.5 parts by weight of 1,3,5-tris(3-dimethylaminopropyl)hexahydro-s-triazine catalyst, 1 part of 2-[2-(dimethylamino)ethoxy]ethanol catalyst, and 4 parts of surfactant (SC-246 silicone oil) were added and thoroughly mixed. Then 2 parts by weight of n-pentane (foaming agent) and 4 parts by weight of water relative to polyol premix were added. The flame retardant system consisting of phosphate polyester and montmorillonite modified with quaternary ammonium salt in the amount of 10 parts by weight relative to polyol mixture was used. The relative use of both system components was 5 parts by weight of modified montmorillonite and 5 parts of phosphate polyester relative to polyol premix. Such prepared premix was completely homogenized and then 80 parts by weight of isocyanate agent (pMDI) were mixed into it for 10 sec.

### Example 7.

1 000 g of alkaline raw glycerol effluent, originating from methanolysis of rapeseed oil, is heated up to 180°C under reduced pressure and stirring in the reactor equipped with a distillation column in order to remove methanol and water. The process is terminated when the condensation of distillate stops. The obtained oligoetherol is characterized by a hydroxyl number of 628 mg KOH/g and brown color. Next, 3 g of 85% aqueous solution of H₃PO₄ and 150 g of fatty acid with phosphorus-containing moieties that retard flammability are added to the obtained polyol, and the mixture is heated to 100°C. After 1 hour, the mixture is heated to 160°C under reduced pressure for 5 hrs. The obtained oligoetherol is characterized by a hydroxyl number in the range from 150 to 300 mg KOH/g and brown color.

### Example 8

Rigid polyurethane foam was prepared as follows: 30 parts by weight of the reaction product after the reaction between oxypropylene and sorbitol (Rokopol RF 551) and 70 parts by weight of environment-friendly polyol with flame-retarding phosphorus-containing moieties and a hydroxyl number L_{OH} = 150-300 mg KOH/g were combined. Next, 1.5 parts by weight of 33% solution of potassium acetate in ethylene glycol as a catalyst, 1.5 parts of 1,3,5-tris(3-dimethylaminopropyl)hexahydro-s-triazine catalyst, alternatively with 2-[2-(dimethylamino)ethoxy]ethanol catalyst, and 4 parts of surfactant (SC-246 silicone oil) were added and thoroughly mixed. Then 2 parts by weight of n-pentane (foaming agent) and 4 parts by weight of water relative to polyol premix were added. Such prepared premix was completely homogenized and then 80 parts by weight of isocyanate agent (pMDI) were mixed into it for 10 sec.

### Example 9

Rigid polyurethane foam was prepared as follows: 10 parts by weight of the reaction product after the reaction between oxypropylene and sorbitol (Rokopol RF 551) and 90 parts by weight of environment-friendly polyol with flame-retarding phosphorus-containing moieties and a hydroxyl number L_{OH} = 150-300 mg KOH/g were combined. Next, 1.5 parts by weight of 33% solution of potassium acetate in ethylene glycol as a catalyst, 1.5 parts of 1,4-diazabicyclo[2.2.2]octane solution in ethylene glycol as a catalyst, and 4 parts of surfactant (SC-246 silicone oil) were added and thoroughly mixed. Then 4 parts by weight of water relative to polyol premix were added. The flame retardant system consisting of phosphate polyester and montmorillonite modified with quaternary ammonium salt in the amount of 10 parts by weight was used as flame retardant. Such prepared premix was completely homogenized and then 80 parts by weight of isocyanate agent (pMDI) were mixed into it for 10 sec.

## Claims

1. Method of obtaining environment-friendly polyols from waste left after transesterification of plant oils **characterized in that** the waste is heated to a temperature In the range between 160 and 240°C, preferably between 175 and 185°C, under reduced pressure, distillating the volatile fraction until no more condensate appears and the resultant product having a hydroxyl number between 400 and 1200 mg KOH/g is obtained, which is next cooled down below 100°C, then acidified with protonic acid, more preferably with sulphuric acid pH 4.5 to 9, preferably from 6.5 to 7.5 and next the reaction mixture is heated under reduced pressure to a temperature between 100 and 120°C until water stops to appear.

2. Method of obtaining environment-friendly rigid polyurethane foam in the reaction of polyol premix with isocyanate agent **characterized in that** the applied polyol premix containing environment-friendly polyol obtained from waste left after transesterification of plant oils is heated to a temperature in the range between 160 and 240°C, preferably between 175 and 185°C, under reduced pressure distillating the volatile fraction, until no more condensate appears and the resultant product having a hydroxyl number between 400 and 1200 mg KOH/g is obtained, which is next cooled down below 100°C, acidified with protonic acid, more preferably with sulphuric acid pH 4.5 to 9, preferably from 6.5 to 7.5 and next the reaction mixture is heated under reduced pressure to a temperature between 100 and 120°C until water stops to appear, and a known isocyanate agent Is added in the amount corresponding to the value of IC index between 0.5 and 4.0.

3. Method according to claim 2 **characterized in that** flame retardants are added in the amount ranging from 0.01 to 40 parts by weight relative to the foam mass.

4. Method according to claim 3 **characterized in that** phyllosilicate nanofillers are used as flame retardants, preferably nanosilicates, bentonites, smectites, halosites, montmorillonites and/or their modified forms, preferably organophilic modified with cations of organic salts and/or acid-activated and/or substituted with transition-metal ions.

5. Method according to claim 3 **characterized in that** silsesquioxanes are used as nanofillers.

6. Method according to claim 3 **characterized in that** halogen-free compounds from the group of: compounds based on phosphate esters, ammonium polyphosphate, phosphites, organophosphates, metal phosphates, red phosphorus, phosphorus-based derivatives of melamine such as melamine phosphate, melamine pyrophosphate and other products containing nitrogen and phosphorus derivatives, boron compounds, preferably zinc borate, melamine borates and other boric acid-based derivatives, metal hydroxides, preferably aluminum hydroxides and magnesium hydroxides, mineral fillers and additives such as ammonium salts, molybdenum derivatives and magnesium heptahydrate sulfate, melamine and its derivatives, and expanded graphite, are used as flame retardants.

7. Method according to claim 3 **characterized in that** nanofiller-antipyrene systems with 0.01 - 20 wt.% of nanofiller and 1-40 wt.% of antipyrene are used as flame retardants.

8. Method of obtaining environment-friendly polyols from waste left after transesterification of plant oils **characterized in that** the waste is heated to a temperature in the range between 160 and 240°C, preferably between 175 and 185°C, under reduced pressure distillating the volatile fraction, until no more condensate appears and the resultant product having a hydroxyl number between 400 and 1200 mg KOH/g is obtained, next fatty acids from the group of: methyl esters of fatty acids, and plant oils in the form of rapeseed oil and/or castor oil and/or tall oil and/or the products of tall oil distillation and/or linseed oil are added in excess, then the mixture is mixed at a temperature ranging from 160 to 200°C. preferably from 175 to 185°C, until reaching the constant hydroxyl number and next cooled below 100°C, and acidified with a protonic acid, preferably with sulphuric acid pH 4.5 to 9, preferably from 6.5 to 7.5. and next, the reaction mixture is heated under reduced pressure to a temperature between 100 and 120°C until water stops to appear.

9. Method of obtaining environment-friendly rigid polyurethane foam in the reaction of polyol premix with isocyanate agent **characterized in that** the applied polyol premix containing environment-friendly polyol obtained from waste left after transesterification of plant oils is heated to a temperature in the range between 160 and 240°C, preferably between 175 and 185°C, under reduced pressure distillating the volatile fraction until no more condensate appears and the resultant product having a hydroxyl number between 400 and 1200 mg KOH/g is obtained, next fatty acids from the group of methyl esters of fatty acids, and plant oils in the form of rapeseed oil and/or castor oil and/or tall oil and/or the products of tall oil distillation and/or linseed oil are added in excess, then the mixture is mixed at a temperature ranging from 160 to 200°C, preferably from 175 to 185°C, until reaching the constant hydroxyl number and next cooled below 100°C, and acidified with a protonic acid, preferably with sulphuric acid pH 4.5 to 9, preferably from 6.5 to 7.5 and next the reaction mixture is heated under reduced pressure to a temperature between 100 and 120°C until water stops to appear and a known isocyanate agent is added in the amount corresponding to the value of IC index between 0.5 and 4.0.

10. Method according to claim 9 **characterized in that** flame retardants are added in the amount ranging from 0.01 to 40 parts by weight relative to the foam mass.

11. Method according to claim 10 **characterized in that** phyllosilicate nanofillers are used as flame retardants, preferably nanosilicates, bentonites, smectites, halosites, montmorillonites and/or their modified forms, preferably organophilic modified with cations of organic salts and/or acid-activated and/or substituted with transition-metal ions.

12. Method according to claim 10 **characterized in that** silsesquioxanes are used as nanofillers.

13. Method according to claim 10 **characterized in that** halogen-free compounds from the group of: compounds based on phosphate esters, ammonium polyphosphate, phosphites, organophosphates, metal phosphates, red phosphorus, phosphorus-based derivatives of melamine such as melamine phosphate, melamine pyrophosphate and other products containing nitrogen and phosphorus derivatives, boron compounds, preferably zinc borate, melamine borates and other boric acid-based derivatives, metal hydroxides, preferably aluminum hydroxides and magnesium hydroxides, mineral fillers and additives such as ammonium salts, molybdenum derivatives and magnesium heptahydrate sulfate, melamine and its derivatives, and expanded graphite, are used as flame retardants.

14. Method according to claim 10 **characterized in that** nanofiller-antipyrene systems with 0.01 - 20 wt.% of nanofiller and 1-40 wt.% of antipyrene are used as flame retardants.

15. Method of obtaining environment-friendly polyols from waste left after transesterification of plant oils **characterized in that** the waste is heated to a temperature in the range between 160 and 240°C, preferably between 175 and 185°C, under reduced pressure distillating the volatile fraction until no more condensate appears and the resultant product having a hydroxyl number between 400 and 1200 mg KOH/g is obtained, next fatty acids from the group of methyl esters of fatty acids, and plant oils in the form of: rapeseed oil and/or castor oil and/or tall oil and/or the products of tall oil distillation and/or linseed oil modifed with phosphorus" and/or nitrogen-containing moieties that retard flammability are added in excess, then the mixture is mixed at a temperature ranging from 160 to 200°C, preferably from 175 to 185°C, until reaching the constant hydroxyl number and next cooled below 100°C, and acidified with a protonic acid, preferably with sulphuric acid pH 4.5 to 9, preferably from 6.5 to 7.5 and next the reaction mixture is heated under reduced pressure to a temperature between 100 and 120°C until water stops to appear.

16. Method of obtaining environment-friendly rigid polyurethane foam in the reaction of polyol premix with isocyanate agent **characterized In that** the applied polyol premix containing environment-friendly polyol obtained from waste left after transesterification of plant oils is heated to a temperature in the range between 160 and 240°C, preferably between 175 and 185°C, under reduced pressure distillating the volatile fraction until no more condensate appears and the resultant product having a hydroxyl number between 400 and 1200 mg KOH/g is obtained, next fatty acids from the group of methyl esters of fatty acids, and plant oils in the form of: rapeseed oil and/or castor oil and/or tall oil and/or the products of tall oil distillation and/or linseed oil modified with phosphorus- and/or nitrogen-containing moieties that retard flammability are added in excess, then the mixture is mixed at a temperature ranging from 160 to 200°C, preferably from 175 to 185°C, until reaching the constant hydroxyl number and then the mixture is cooled below 100°C, and acidified with a protonic acid, preferably with sulphuric acid pH 4.5 to 9, preferably from 6.5 to 7.5 and next, the reaction mixture is heated under reduced pressure to a temperature between 100 and 120°C until water stops to appear and a known isocyanate agent is added in the amount corresponding to the value of IC index between 0.5 and 4.0.

17. Method according to claim 16 **characterized in that** flame retarding compounds are added in the amount ranging from 0.01 to 40 parts by weight relative to the foam mass.

18. Method according to claim 17 **characterized in that** phyllosilicate nanofillers are used as flame retardants, preferably nanosilicates, bentonites, smectites, halosites, montmorillonites and/or their modified forms, preferably organophilic modified with cations of organic salts and/or acid-activated and/or substituted with transition-metal ions.

19. Method according to claim 17 **characterized in that** silsesquioxanes are used as nanofillers.

20. Method according to claim 17 **characterized in that** halogen-free compounds from the group of: compounds based on phosphate esters, ammonium polyphosphate, phosphites, organophosphates, metal phosphates, red phosphorus, phosphorus-based derivatives of melamine such as melamine phosphate, melamine pyrophosphate and other products containing nitrogen and phosphorus derivatives, boron compounds, preferably zinc borate, melamine borates and other boric acid-based derivatives, metal hydroxides, preferably aluminum hydroxides and magnesium hydroxides, mineral fillers and additives such as ammonium salts, molybdenum derivatives and magnesium heptahydrate sulfate, melamine and its derivatives, and expanded graphite, are used as flame retardants.

21. Method according to claim 17 **characterized in that** nanofiller-antipyrene systems with 0.01 - 20 wt.% of nanofiller and 1-40 wt.% of antipyrene are used as flame retardants.
